# EUROPÄISCHE PATENTSCHRIFT

(11) **EP 0 592 468 B1**
(45) Veröffentlichungstag und Bekanntmachung des Hinweises auf die Patenterteilung: **22.05.1996**
(21) Anmeldenummer: 92911940.2
(22) Anmeldetag: 16.06.1992
(51) Int. Cl.: H02K 21/14, G06F 3/06

(54) **IN EDV-EINRICHTUNGEN EINSTECKBARES ELEMENT**
ELEMENT FOR INSERTION IN DATA-PROCESSING EQUIPMENT
ELEMENT INSERABLE DANS DES APPAREILS INFORMATIQUES

(30) Priorität: 04.07.1991 DE 4122170
(43) Veröffentlichungstag der Anmeldung: 20.04.1994
(73) Patentinhaber: SMARTDISKETTE GmbH, D-65510 Idstein (DE)
(72) Erfinder: JENKINS, Marcus, Sheffield S11 7RW (GB); HARMER, Keith, Ashington Northumberland NE63 8QF (GB)
(74) Vertreter: Leineweber, Jürgen, Dipl.-Phys.
(86) Internationale Anmeldenummer: EP9201357
(87) Internationale Veröffentlichungsnummer: WO9301643

(56) Entgegenhaltungen:
- EP-A- 0 128 518
- DE-A- 3 903 454
- US-A- 2 638 557

## Beschreibung

Die Erfindung bezieht sich auf ein in EDV-Einrichtungen einsteckbares Element mit der äußeren Form einer Diskette oder Kassette, mit elektronischen Schaltkreisen und mit einem Stromgenerator, der einen mindestens eine Spule umfassenden Stator sowie einen Rotor aufweist, dessen Nabe in der Betriebsposition des Elementes mit der Antriebswelle der EDV-Einrichtung in Eingriff steht.

Die Gestaltung eines Stromgenerators mit ausreichender Leistung für ein Element dieser Art ist schwierig, da das Element z.B. die äußere Form einer handelsüblichen 3,5"-Diskette hat, also nicht höher ist als etwa drei Millimeter.

Aus der DE-A-39 03 454 ist ein Element der eingangs genannten Art bekannt. Über die Gestaltung des Stromgenerators selbst sind Einzelheiten nicht offenbart.

Die EP-A-128 518 offenbart einen Generator für einen Tachometer mit einer bürstenlosen Anordnung, die zur Erregung einen rotierenden Permanentmagneten beinhaltet.

Der vorliegenden Erfindung liegt die Aufgabe zugrunde, den Stromgenerator des eingangs erwähnten, in EDV-Einrichtungen einsteckbaren Elementes derart zu gestalten, daß er in der Lage ist, die elektronischen Schaltkreise ausreichend mit Energie zu versorgen.

Erfindungsgemäß wird diese Aufgabe durch die Merkmale der Patentansprüche gelöst. Ein in dieser Weise ausgebildeter Generator ist in der Lage, in dem Element untergebrachte elektronische bzw. integrierte Schaltkreise (Prozessor, Treiber usw.) ausreichend mit Strom zu versorgen. Selbst weitere mit dem Element verbindbare oder in das Element einsteckbare Bauteile, welche ihrerseits mit Strom zu versorgende Schaltungen enthalten, können vom Generator versorgt werden. Die Statorbleche dienen dem Aufbau der magnetischen Kreise, mit deren Hilfe der Strom in den Spulen induziert wird. Mit diesen Mitteln kann ein Generator ausreichender Leistung aufgebaut werden, ohne die äußeren Maße einer handelsüblichen 3,5"-Diskette zu überschreiten.

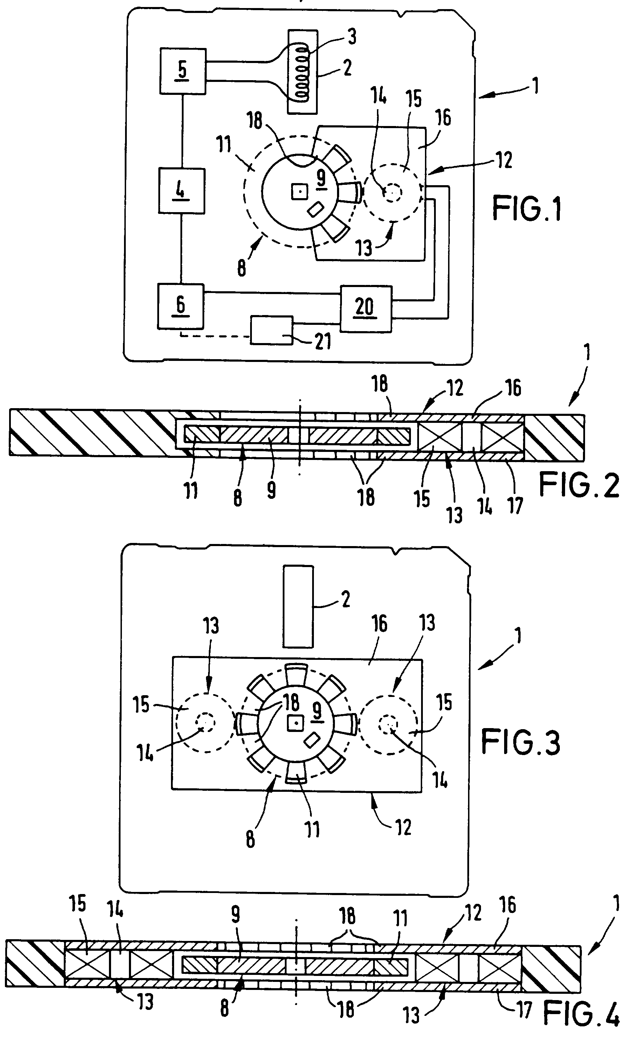

Weitere Vorteile und Einzelheiten der Erfindung sollen anhand von in den Figuren 1 bis 10 schematisch dargestellten Ausführungsbeispielen erläutert werden.

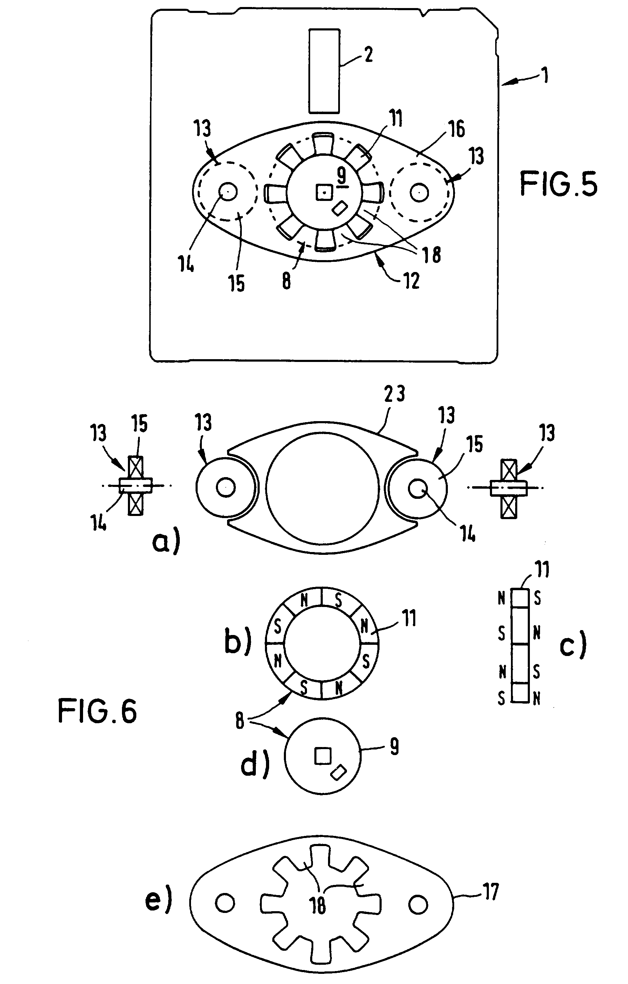

Die Figuren zeigen vorzugsweise Draufsichten (Figuren 1,3,5,7, 9) und vergrößerte, nicht maßstabsgerechte Schnitte (Figuren 2,4,8,10) durch Elemente mit erfindungsgemäß gestalteten Stromgeneratoren. Nur in Figur 1 sind elektronische, mit Strom zu versorgende Schaltkreise dargestellt. Die Figuren 6 a bis 6 e zeigen einzelne Bauteile, aus denen der Stromgenerator nach Figur 5 besteht.

Das in Figur 1 dargestellte Element 1 hat die äußere Form einer handelsüblichen 3,5"-Diskette. Die dem Schreib-/Lesekopf in der zugehörigen Diskettenstation zugeordnete Öffnung ist mit 2 bezeichnet. Im Bereich dieser Öffnung befindet sich die Schnittstelle 3, über die eine Datenübertragung zwischen dem Prozessor 4 und dem Schreib-/Lesekopf in einer handelsüblichen Diskettenstation erfolgt. Ein Speicher und ein Treiber sind mit 5 bzw. 6 bezeichnet.

Bestandteil des Rotors oder Läufers 8 des Generators ist eine Nabe 9, die in Ihrer Form und Gestaltung der Nabe einer handelsüblichen 3,5"-Diskette entspricht und mit den erforderlichen Eingriffsöffnungen ausgerüstet ist. Ein ringförmiger Magnet 11 umgibt die Nabe 9 und ist von außen darauf befestigt, beispielsweise geklebt. Dieser Ringmagnet 11 ist in Figur 1 nicht näher dargestellter Weise abschnittsweise in axialer Richtung magnetisiert.

Bestandteil des Stators 12 ist beim Ausführungsbeispiel nach Figur 1 eine Spule 13 mit Spulenkern 14 und Wicklung 15. Die Spulenachse liegt parallel zur Drehachse des Rotors 8. Zusätzlich sind zwei Deckbleche 16, 17 vorgesehen, die den beiden Stirnseiten der Spule 13 von außen anliegen und im Bereich des Ringmagneten 11 halbrund ausgespart und zahnförmig ausgebildet sind. Die sich radial nach innen erstreckenden Zähne 18 befinden sich oberhalb und unterhalb des rotierenden Ringmagneten 11. Zweckmäßig sind die Zähne 18 derart angeordnet, daß einem Zahn 18 des einen Bleches ein Zahn des anderen Bleches gegenübersteht oder daß ein Zahn 18 des einen Bleches einem Zahn des anderen Bleches geringfügig versetzt gegenübersteht.

Der während der Rotation des Rotors bzw. Läufers 8 in der Windung 15 der Spule 13 erzeugte Strom wird einem Stromregler 20 zugeführt. Der Ausgang des Reglers 20 steht mit den zu versorgenden Schaltkreisen in Verbindung. Es besteht auch die Möglichkeit, eine Batterie 21 vorzusehen und diese mit Hilfe des Stromgenerators aufzuladen. Bauteile, beispielsweise Speicher, die auch bei aus der Diskettenstation herausgenommenem Element eine Spannung benötigen, können mit Hilfe der Batterie 21 versorgt werden.

Das Ausführungsbeispiel nach den Figuren 3 und 4 unterscheidet sich vom Ausführungsbeispiel nach den Figuren 1 und 2 dadurch, daß der Stator 12 zwei Spulen 13 umfaßt. Die Deckbleche 16, 17 liegen den Stirnseiten beider Spulen 13 an. Sie weisen kreisförmige Öffnungen mit radial nach innen gerichteten Zähnen 18 auf. Insgesamt sind auf jeder Seite acht Zähne 18 vorgesehen. Dieser Zahl entspricht die Anzahl der alternierend radial magnetisierten Abschnitte des Ringmagneten 11. Weitere Ausführungsbeispiele mit mehr als zwei Spulen 13 und/oder mit anderen Polzahlen (4,16,32 usw.) sind möglich.

Die Figuren 5 und 6 zeigen detailliert den Aufbau eines Stromgenerators nach einer Ausgestaltung der Erfindung. Die obere, den Stirnseiten der Spulen 13 anliegende Deckplatte (Statorblech 16) ist oval gestaltet. Die Spulenkerne 14 sind darin geführt. Ein Abstandshalter 23 hält die Spulen 13, die in Figur 6a auch im Schnitt dargestellt sind, in der gewünschten Position. Der an der Nabe 9 (Figur 6d) befestigte Magnetring 11 ist abschnittsweise in axialer Richtung magnetisiert. Die wechselnden Nord- und Südpole sind in den Figuren 6b (Draufsicht) und 6c (Seitenansicht) mit N bzw. S bezeichnet. Der Magnetring 11 kann auch aus in der beschriebenen Weise magnetisierten Abschnitten zusammengesetzt (geklebt usw.) sein. Die Unterseite des Stators 12 bildet die Deckplatte 17 (Fig. 6e).

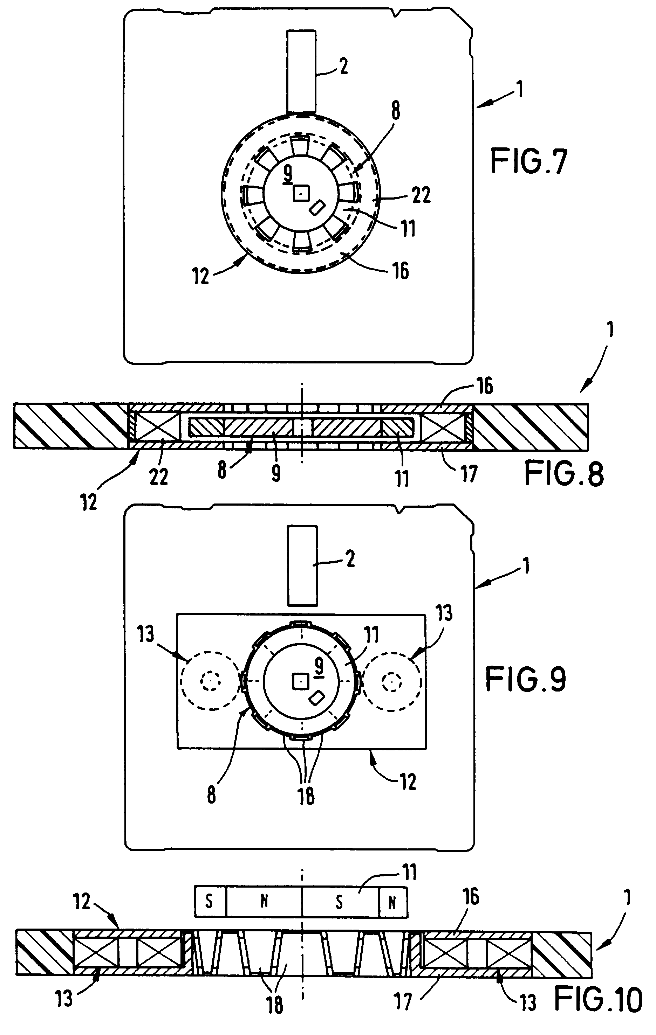

Beim Ausführungsbeispiel nach den Figuren 7 und 8 sind die Spulen 13 durch eine Torodial-Spule 22 ersetzt. Diese umgibt unmittelbar den Ringmagneten 11. Sie ist derart gewickelt, daß ihre Wickelachse den Ringmagneten 11 konzentrisch umgibt.

Das Ausführungsbeispiel nach den Figuren 9 und 10 umfaßt Statorbleche 16, 17 mit gegenüber den vorbeschriebenen Beispielen unterschiedlicher Zahngestaltung. Die Zähne 18 sind um etwa 90° gegenüber der Ebene des Elementes 1 nach innen derart abgebogen, daß in die Zahnlücke des jeweils einen Statorbleches 16 bzw. 17 ein Zahn 18 des jeweils anderen Statorbleches 17 bzw. 16 eingreift. Die Zähne 18 umfassen den Magnetring 11, der in radialer Richtung (vgl. Seitenansicht in Fig. 10) magnetisiert ist. Der Vorteil dieser Lösung besteht unter anderem darin, daß ein Magnetring 11 mit einer maximalen Höhe, die etwa der Höhe des Elementes 1 entspricht, einsetzbar ist.

Die beschriebenen Generatoren liefern Ströme, die zur Versorgung von integrierten Schaltkreisen ausreichen.

Die Verwendung von Magneten aus Werkstoffen mit hoher Koerzitivfeldstärke, beispielsweise Nickel-Eisen-Bor-Magneten, geschweißt oder gesintert, ist zweckmäßig. Auch in Elementen 1, die die äußere Form einer Kassette haben, ist der Generator einsetzbar.

## Patentansprüche

1. In EDV-Einrichtungen einsteckbares Element (1) mit der äußeren Form einer Diskette oder Kassette, mit elektronischen Schaltkreisen (4,5,6) und mit einem Stromgenerator, der einen mindestens eine Spule (13) umfassenden Stator sowie einen Rotor (8) aufweist, dessen Nabe (9) in der Betriebsposition des Elementes (1) mit der Antriebswelle der EDV-Einrichtung in Eingriff steht, dadurch gekennzeichnet, daß die Nabe (9) einen ringförmigen, die Nabe (9) umfassenden Magneten (11) trägt, welcher abschnittsweise mit entgegengesetzt gerichteten Polen magnetisiert ist, und daß der Stator neben der bzw. den Spule(n) (13) Statorbleche (16,17) umfaßt, zwischen denen sich die Spule(n) (13) befindet bzw. befinden und die sich bis in die unmittelbare Nähe des Ringmagneten (11) erstrecken, daß die Statorbleche (16,17) eine zentrale Öffnung mit nach innen gerichteten Zähnen (18) aufweisen, welche dem Magneten (11) zugeordnet sind, und daß sich die Zähne (18) radial derart nach innen erstrecken, daß sich der Ringmagnet (11) zwischen den Zähnen befindet, und daß der Magnet abschnittsweise alternierend in axialer Richtung magnetisiert ist.

2. In EDV-Einrichtungen einsteckbares Element (1) mit der äußeren Form einer Diskette oder Kassette, mit elektronischen Schaltkreisen (4,5,6) und mit einem Stromgenerator, der einen mindestens eine Spule (13) umfassenden Stator sowie einen Rotor (8) aufweist, dessen Nabe (9) in der Betriebsposition des Elementes (1) mit der Antriebswelle der EDV-Einrichtung in Eingriff steht, dadurch gekennzeichnet, daß die Nabe (9) einen ringförmigen, die Nabe (9) umfassenden Magneten (11) trägt, welcher abschnittsweise mit entgegengesetzt gerichteten Polen magnetisiert ist, und daß der Stator neben der bzw. den Spule(n) (13) Statorbleche (16,17) umfaßt, zwischen denen sich die Spule(n) (13) befindet bzw. befinden und die sich bis in die unmittelbare Nähe des Ringmagneten (11) erstrecken, daß die Statorbleche (16,17) eine zentrale Öffnung mit nach innen gerichteten Zähnen (18) aufweisen, welche dem Magneten (11) zugeordnet sind, daß die Zähne (18) gegenüber der Ebene der Statorbleche (16,17) derart nach innen abgebogen sind, daß die Zähne (18) den Ringmagneten (11) von außen umfassen, und daß der Ringmagnet (11) abschnittsweise alternierend in radialer Richtung magnetisiert ist.

3. Element nach Anspruch 1 oder 2, dadurch gekennzeichnet, daß zwei Spulen (13) mit sich parallel zur Drehachse der Nabe (9) erstreckenden Achsen vorgesehen sind.

4. Element nach Anspruch 3, dadurch gekennzeichnet, daß für die Spulen (13) ein Abstandshalter (23) vorgesehen ist.

5. Element nach Anspruch oder 2, dadurch gekennzeichnet, daß der Magnetring (11) von einer Torodial-Spule (22) umgeben ist

6. Element nach einem der vorhergehenden Ansprüche, dadurch gekennzeichnet, daß es neben einem Regler (20) eine aufladbare Batterie (21) enthält.

## Claims

1. Element (1) for insertion into data-processing equipment in the shape of a diskette or cassette with electronic circuits (4,5,6) and a power generator consisting of a stator with at least one coil (13) and of a rotor (8), the drive collar (9) of which engages with the drive shaft of the data-processing equipment, characterized by the fact that the drive collar (9) carries a ring-shaped magnet (11) which magnet concentrically surrounds the drive collar (9) and has individual sections magnetically poled in opposite directions, and that the stator, aside from the coil or coils (13), consists of stator plates (16, 17) between which the coils (13) are located and which plates extend to the direct vicinity of the ring magnet (11), that the stator plates (16, 17) have a central opening with inwardly directed teeth (18) that are correlated to the magnet (11), and that the teeth (18) extend inward such that the ring magnet (11) is located between the teeth, and that the individual sections of the magnet are axially magnetized alternatingly in opposite directions.

2. Element (1) for insertion into data-processing equipment in the shape of a diskette or cassette with electronic circuits (4,5,6) and a power generator consisting of a stator with at least one coil (13) and of a rotor (8), the drive collar (9) of which engages with the drive shaft of the data-processing equipment, characterized by the fact that the drive collar (9) carries a ring-shaped magnet (11) which magnet concentrically surrounds the drive collar (9) and has individual sections magnetically poled in opposite directions, and that the stator, aside from the coil or coils (13), consists of stator plates (16, 17) between which the coils (13) are located and which plates extend to the directly vicinity of the ring magnet (11), that the teeth (18) are bent inward such that the teeth (18) surround the outer circumference of the ring magnet (11) and that the individual sections of the magnet are radially magnetized alternatingly in opposite directions.

3. Element in accordance with claim 1 or 2, characterized by the fact that two coils (13) are provided, with the coil axes arranged parallel to the rotational axis of the drive collar (9).

4. Element in accordance with claim 3, characterized by the fact that a spacer element (23) is provided for the coils (13).

5. Element in accordance with claim 1 or 2, characterized by the fact that the ring magnet (11) is surrounded by a torroidal coil (22).

6. Element in accordance with one of the previous claims characterized by the fact that, besides a current regulator (20), it also contains a rechargeable battery (21).

## Revendications

1. Elément enfichable (1) dans les installations informatiques avec la forme externe d'une disquette ou d'une cassette, avec des circuits de commande électroniques (4, 5, 6) et un générateur de courant comprenant un stator avec au moins une bobine (13) et un rotor (8) dont le moyeu (9) est enclenché dans la position de service de l'élément (1) avec l'arbre de transmission de l'installation informatique, ce qui est caractérisé par un aimant en forme d'anneau (11) entourant le moyeu (9), lequel moyeu est magnétisé en sections avec des pôles opposés, et le stator entourant également, à côté de la bobine ou des bobines (13), des tôles de stator (16, 17) au milieu desquelles les bobines (13) se trouvent et qui s'étendent jusqu'à proximité directe de l'aimant en anneau (11), les tôles de stator (16, 17) ayant une ouverture centrale avec des dents (18) orientées vers l'intérieur, dents agencées de manière radiale sur l'aimant (11) de telle sorte que l'aimant en anneau (11) se trouve entre les dents et se magnétise par sections alternativement dans le sens axial.

2. Elément enfichable (1) dans les installations informatiques avec la forme externe d'une disquette ou d'une cassette, avec des circuits de commande électroniques (4, 5, 6) et un générateur de courant comprenant un stator avec au moins une bobine (13) et un rotor (8) dont le moyeu (9) est enclenché dans la position de service de l'élément (1) avec l'arbre de transmission de l'installation informatique, ce qui est caractérisé par un aimant en forme d'anneau (11) entourant le moyeu (9), lequel moyeu est magnétisé en sections avec des pôles opposés, et le stator entourant également, à côté de la bobine ou des bobines (13), des tôles de stator (16, 17) au
milieu desquelles les bobines (13) se trouvent et qui s'étendent jusqu'à proximité directe de l'aimant en anneau (11), les tôles de stator (16, 17) ayant une ouverture centrale avec des dents (18) orientées vers l'intérieur, dents agencées sur l'aimant (11) les dents (18) étant retournées vers l'intérieur en face du plan des tôles de stator (16, 17) de telle sorte que les dents (18) entourent l'aimant en anneau (11) de l'extérieur et que l'aimant en anneau (11) se trouve entre les dents et se magnétise par sections alternativement dans le sens radial.

3. Elément d'après la spécification 1 ou 2, caractérisé par le fait que deux bobines (13) avec des axes parallèles à l'axe de rotation du moyeu (9) sont prévus.

4. Elément d'après la spécification 3, caractérisé par le fait qu'une cale d'écartement (23) est prévue pour les deux bobines (13).

5. Elément d'après la spécification 1 ou 2, caractérisé par le fait que l'aimant en anneau (11) est entouré par une bobine torodial (13).

6. Elément d'après une des spécifications précédentes, caractérisé par le fait qu'il contient, à côté d'un régulateur (20), une batterie rechargeable (21).
